# EUROPÄISCHE PATENTSCHRIFT

(11) **EP 0 714 915 B1**
(45) Veröffentlichungstag und Bekanntmachung des Hinweises auf die Patenterteilung: **25.08.1999**
(21) Anmeldenummer: 95118447.2
(22) Anmeldetag: 23.11.1995
(51) Int. Cl.: C08F 2/02, C08F 2/06, C09D 157/00, C09J 157/00, C08F 291/00

(54) **Niedermolekulare funktionelle Copolymerisate, Verfahren zu ihrer Herstellung und ihre Verwendung**
Low molecular weight functional copolymers, process for their preparation and their use
Copolymères functionnels à bas poids moléculaire, procédé de leur préparation et leur usage

(30) Priorität: 01.12.1994 DE 4442769
(43) Veröffentlichungstag der Anmeldung: 05.06.1996
(73) Patentinhaber: HOECHST AKTIENGESELLSCHAFT, 65926 Frankfurt am Main (DE)
(72) Erfinder: Epple, Ulrich, Dr., D-65205 Wiesbaden (DE); Bittner, Annegret, D-65187 Wiesbaden (DE)
(74) Vertreter: Zounek, Nikolai, Dipl.-Ing.

(56) Entgegenhaltungen:
- EP-A- 0 638 591
- WO-A-90/03991

## Beschreibung

Niedermolekulare funktionelle Copolymerisate können durch die radikalische Lösemittelpolymerisation hergestellt werden (EP-A-0 408 858, EP-A-0 398 387, US-A-4,145,513, DE-A-40 01 580, DE-A-41 00 430, DE-A-28 51 614, DE-A-28 51 615, DE-A-28 51 616). Die hohen erforderlichen Mengen Polymerisationsinitiatoren und Polymerisationsregler sowie deren Folgeprodukte, die teilweise nicht in die Polymerketten eingebaut werden, beeinträchtigen die Eigenschaften der Polymerisate und damit den Einsatz als schnell trocknende Beschichtungsmittel. Zusätzlich können die verwendeten Polymerisationsregler, wie z.B. Thiole, übel riechen oder sogar giftig sein.

Die Polymerisate, die mit Hilfe der radikalischen Lösemittelpolymerisation bei hoher Temperatur in hochsiedenden Lösemitteln erhalten werden, besitzen wohl die angestrebten geringsten Molmassen, lassen aber die freie Wahl der Anlösung nicht mehr zu. Dieser Nachteil zeigt sich dadurch, daß die resultierenden Beschichtungen beliebig lange Staub- und Klebfreitrockungszeiten z.T. allein auf Grund der Lösemittel besitzen können.

Andererseits sind reine Massepolymerisationen möglich, bei der nur Monomere, Polymere und Initiator anwesend sind, doch läßt sich solch eine Polymerisation durch das Freiwerden sehr großer Wärmemengen in kurzer Reaktionszeit kaum kontrollieren.

Eine Polymerisation in Substanz hingegen, bei der eine oder mehrere niedermolekulare Komponenten vorgelegt und bei erhöhter Temperatur mit anderen Komponenten in einer radikalischen Polymerisation umgesetzt werden, bietet den Hauptvorteil der effizienten und raschen Abführung der Reaktionswärme.

Solche Substanzpolymerisate sind lösemittelfreie Produkte, die entweder als feste Harze vorliegen oder in wählbaren, meist niedrigsiedenden Lösemitteln gelöst werden können. Zudem ist vorteilhaft, daß der Grad der Anlösung (Festkörpergehalt) eingestellt werden kann. Solche Polymerisationen werden in EP-A-0 027 931, EP-A-0 056 971, DE-C-43 24 801, DE-C-43 26 656, DE-C-44 15 319 und DE-C-44 35 950 beschrieben. Die hier vorgelegte Komponente, der Glycidylester bzw. das Maleinat, wirkt zunächst als Lösemittel und wird im Laufe der Reaktion vollständig in das Copolymerisationsprodukt eingebaut, so daß keine unumgesetzten störenden Bestandteile mehr im Endprodukt vorhanden sind.

Beispiele, bei denen cyclische oder ringförmige Komponenten, wie Lactone oder Lactame allein oder in Kombination mit mehrwertigen Alkoholen vorgelegt werden, sind gleichfalls bekannt (WO-A-90/03991, EP-A-0 580 054).

Die Edukte werden so gewählt, daß der Rückfluß von den Spaltprodukten des Initiators und niedrigsiedenden Monomeren auch bei den hohen Polymerisationstemperaturen beherrschbar ist. Dies bedeutet eine Beschränkung beim Einsatz niedrigsiedender Monomeren wie z.B. Methylmethacrylat.

Copolymere mit hohen Gehalten an Methylmethacrylat und dafür verringerten Gehalten an Vinylaromaten sind wünschenswert, da die daraus hergestellten Beschichtungsmittel wetterbeständiger sind und weniger zur Vergilbung neigen.

Es bestand daher die Aufgabe, mit Hilfe des vorteilhaften Substanzpolymerisationsverfahrens niedermolekulare, funktionelle Copolymerisate herzustellen, die auch hohe Gehalte an niedrigsiedenden Monomeren wie Methylmethacrylat im Polymerisationsverfahren zulassen.

Überraschend wurde gefunden, daß durch den Zusatz von Makromonomeren, nämlich reaktiven Oligo- oder Polymeren, die Einbaurate der niedrigsiedenden Monomere erhöht wird und daher Polymere leicht zugänglich sind, die diese niedrigsiedenden Monomere in höheren Anteilen enthalten.

Die Erfindung betrifft daher ein Verfahren zur Herstellung von niedermolekularen funktionellen Polymerisaten, dadurch gekennzeichnet, daß vor Beginn der Polymerisation eine erste Menge M1 einer Mischung vorgelegt wird, die mindestens eine Komponente ausgewählt aus olefinisch ungesättigten Monomeren B und Verbindungen A enthält, die selbst nicht copolymerisierbar sind, die aber mit mindestens einem der Monomeren B unter Bildung einer copolymerisierbaren Additionsverbindung reagieren können, danach die Polymerisation durch Zugabe von Polymerisationsinitiatoren und gegebenenfalls Reglern eingeleitet wird, wobei während der Polymerisation eine weitere Menge M2 einer Mischung zudosiert wird, deren Zusammensetzung gleich oder verschieden von der ersten Mischung sein kann und die mindestens eine Komponente ausgewählt aus olefinisch ungesättigten Monomeren B und Verbindungen A enthält, wobei in mindestens einer der Mengen M1 und M2 ein Oligomer oder Polymer C gelöst ist und wobei mindestens eine der Mischungen M1 und M2 eine Komponente B enthält. Die Gegenwart der Komponente C ist ein wesentliches Element der Erfindung.

Eine bevorzugte Variante dabei ist, zunächst lediglich die Komponente A vorzulegen und das Gemisch der Monomeren B mit der Komponente C getrennt oder gemeinsam mit Polymerisationsinitiator und gegebenenfalls Regler zuzudosieren.

Eine andere bevorzugte Variante ist, eine Lösung der Komponente C in der Komponente A vorzulegen und dann das Gemisch der Monomeren B gegebenenfalls unter Zusatz einer weiteren Menge der Komponente C getrennt oder gemeinsam mit Polymerisationsinitiator und gegebenenfalls Regler zuzudosieren.

Eine dritte bevorzugte Variante ist, zunächst eine Menge M1 einer Mischung von Monomeren B, der Komponente A und der Komponente C vorzulegen, und dann eine Menge M2 eines anders zusammengesetzten Gemischs der Monomeren B gegebenenfalls unter Zusatz einer weiteren Menge der Komponente C getrennt oder gemeinsam mit Polymerisationsinitiator und gegebenenfalls Regler zuzudosieren. Dabei werden niedriger siedende Monomere erst im Lauf der Polymerisation zugegeben.

Eine weitere Variante ist, eine oder mehrere Verbindungen A nach Abschluß der Polymerisation zuzusetzen.

Eine weitere Variante ist, zusätzliche Mengen an Polymerisationsinitiatoren und gegebenenfalls Reglern während der Polymerisation nachzudosieren.

In einer besonders bevorzugten Variante des erfindungsgemäßen Verfahrens wird mindestens eine Komponente A vorgelegt, ausgewählt aus Maleinaten, Lactonen, Lactamen, Monoepoxiden (Glycidylkomponenten), Ketenen, cyclischen Carbonaten und cyclischen Formalen, gegebenenfalls auch in Kombination mit mehrwertigen Alkoholen; ein Gemisch von mindestens einem Oligomeren oder Polymeren C mit mindestens einer funktionellen Gruppe oder einer polymerisierbaren Einheit und Monomeren B wird "in situ" gebildet oder hinzugefügt, die zum Teil niedrige Siedepunkte aufweisen; anschließend wird eine radikalische Substanzpolymerisation durchgeführt. Die Parameter Polymerisationstemperatur, sowie Art und Menge des Initiators und gegebenenfalls Reglers können so gewählt werden, daß die Polymerisation beherrschbar ist und nicht umgesetzte störenden Bestandteile im Endprodukt nicht mehr vorhanden sind.

Diese erfindungsgemäßen Copolymerisate sind insbesondere herstellbar durch die radikalische Umsetzung von
- A: einem oder mehreren Glycidylestern von gesättigten aliphatischen Monocarbonsäuren mit einem tertiären oder quaternären α-C-Atom und
- B: mindestens zwei ungesättigten copolymerisierbaren Monomeren, von denen mindestens eines mindestens eine COOH-Gruppe enthält, und
- C: mindestens einem Oligomeren oder Polymeren, das entweder mindestens eine funktionelle Gruppe oder eine polymerisierbare Einheit trägt.

Insbesondere erhält man vorteilhafte Produkte im Sinne der Erfindung, wenn eine Mischung von
- A: 1,0 bis 35,0 % Glycidylestern mit 7 bis 30 C-Atomen von aliphatischen gesättigten Monocarbonsäuren mit einem tertiären oder quaternären α-C-Atom und
- B: 98,9 bis 40,0 % von mindestens zwei ungesättigten copolymerisierbaren Monomeren, von denen mindestens eines mindestens eine Carboxylgruppe enthält und
- C: 0,1 bis 25,0 % von mindestens einem Oligomeren oder Polymeren, das entweder mindestens eine funktionelle Gruppe oder eine polymerisierbare Einheit enthält,
einer radikalischen Polymerisation unterworfen wird, wobei in einer bevorzugten Ausführungsform mindestens die Komponente A, der Glycidylester, vorgelegt und bei 80 bis 250 °C mit B und C und mindestens einem Initiator in einer Substanzpolymerisation so lange umgesetzt wird, bis ein Umsetzungsgrad von mindestens 95, vorzugsweise mindestens 97,5 % erreicht ist, und die Komponente B mindestens 0,5 % eines COOH-Gruppen aufweisenden Monomeren enthält und die Komponente C mindestens ein Oligomeres oder Polymeres ist, das in das resultierende Copolymer mit eingebaut wird.

In einer bevorzugten Ausführungsform wird eine Mischung aus der Komponente A und der Komponente C vorgelegt, danach werden die Monomeren B gemeinsam oder getrennt mit Polymerisationsinitiatoren zudosiert. In einer weiteren bevorzugten Ausführungsform wird die Komponente C "in situ" aus einer Komponente A und weiteren niedermolekularen Verbindungen oder Monomeren gebildet, bevor die Monomerenhauptmenge und die Initiatoren zudosiert werden. Beispiele für diese Verfahrensweise sind die Verwendung von Epoxyverbindungen als Komponente A und der Zusatz von Dicarbonsäuren, wobei unter Öffnung des Epoxidringes ein Polyester gebildet wird; oder die Verwendung von Lactonen oder Dicarbonsäureanhydriden in Kombination mit zwei- oder mehrwertigen Alkoholen oder hydroxyfunktionellen Monomeren. Bevorzugt wird die Komponente C in dieser Verfahrensweise also durch Polyaddition einer mindestens difunktionellen niedermolekularen Verbindung an einen Teil oder Bestandteil der Komponente A oder B gebildet.

Die Erfindung betrifft weiter niedermolekulare, funktionelle Copolymerisate, die mit diesem Verfahren erhältlich sind. Die Erfindung betrifft zudem auch die Verwendung dieser Polymeren, besonders als Beschichtungsmittel und insbesondere als festkörperreiches ("high solid") Beschichtungsmittel.

Die Erfindung betrifft im besonderen hydroxylgruppenhaltige Acrylat-Copolymerisate, bevorzugt solche mit einer OH-Zahl von 40 bis 250 mg/g, einer niedrigen Lösungsviskosität von 15 bis 2000 mPa·s (50 %ig, 23 °C), einer gewichtsmittleren Molmasse (M_{w}) von kleiner als 10000 g/mol und einem hohen Anteil an Methylmethacrylat. Der Anteil an Methylmethacrylat in den erfindungsgemäßen Copolymerisaten liegt bei mehr als 15 %, bevorzugt mehr als 20 % und besonders bevorzugt mehr als 25 %. Mit dem hier beschriebenen Verfahren werden solche Copolymere erstmals zugänglich. Alle Angaben von Anteilen in % sind hier und im Folgenden Massenanteile und Massengehalte, sofern nichts anderes ausdrücklich festgelegt ist.

Als Komponente A sind solche Verbindungen geeignet, die mit Carboxylgruppenhaltigen Monomeren und/oder mit Hydroxylgruppen-haltigen Monomeren unter Addition oder Polyaddition reagieren, beispielsweise zu Estern und Amiden. Beispiele für solche Verbindungen sind Körper, die eine Epoxygruppe, einen Lacton- oder Lactamring oder eine cyclische Carbonat-, Acetal- oder Anhydridgruppe enthalten, besonders Epoxyverbindungen, Lactone, Lactame, cyclische Carbonate, Maleinate, cyclischen Anhydride, cyclische Acetale und Ketene. Bevorzugt werden Lactone und Epoxyverbindungen, besonders Glycidylester von aliphatischen Monocarbonsäuren, die in α-Stellung zur Carboxylgruppe verzweigt sind.

Die Reaktion zwischen den Carboxylgruppen und den Epoxidgruppen kann unkatalysiert oder katalysiert erfolgen. Als Katalysatoren eignen sich besonders (Erd)Alkalimetall- und Übergangsmetall-Verbindungen, wie beispielsweise Na-, Li-, K-, V-, Zr- und Ti-Verbindungen.

Als Komponente A werden besonders bevorzugt Glycidylester von α-Alkylalkanmonocarbonsäuren und/oder α,α-Dialkylalkanmonocarbonsäuren einzeln oder im Gemisch verwendet. Die Glycidylester haben 7 bis 30, bevorzugt 8 bis 25 Kohlenstoffatome.

Im Ausgangsmonomerengemisch besteht die Komponente A bevorzugt aus einem Glycidylester einer α,α-Dialkylalkanmonocarbonsäure, wie beispielsweise dem Glycidylester der Versatic-10 bzw. 5-Säure.

Die Carboxylgruppen aufweisenden Monomeren müssen in einer solchen Menge angeboten werden, daß die Umsetzung mit der Komponente A vollständig abläuft und sich eine Säurezahl von mindestens 1 mg/g im hergestellten Produkt ergibt.

Die Komponente B ist ein Gemisch von mindestens zwei olefinisch ungesättigten copolymerisierbaren Monomeren, von denen mindestens eines (B1) eine Carboxylgruppe enthält.

Geeignete olefinisch ungesättigte saure Monomere gemäß B1 sind α,β-olefinisch ungesättigten Monocarbonsäuren mit 3 bis 22 Kohlenstoffatomen und Estern aus n-1 mol eines aliphatischen Alkohols mit 1 bis 10 Kohlenstoffatomen mit 1 mol einer α,β-olefinisch ungesättigten n-basigen Polycarbonsäure mit 4 bis 22 Kohlenstoffatomen, wobei n mindestens zwei ist. Beispiele sind Acrylsäure, Methacrylsäure, Crotonsäure, Isocrotonsäure, Vinylessigsäure, sowie Maleinsäure und Fumarsäure und deren Halbester mit aliphatischen Alkoholen mit 1 bis 10 Kohlenstoffatomen.

Zur Katalyse der Carboxy-Epoxyreaktion von α,β-olefinischen Carbonsäuren und Monoepoxiden können übliche Verbindungen wie z.B. Carbonate, Bicarbonate, Formiate, Jodide, Bromide, Fluoride und Hydroxide von Alkalimetallen wie Natrium-, Lithium-, Kalium-, Rubidium- und Cäsiumverbindungen - einzeln oder im Gemisch - eingesetzt werden. Besonders bewährt haben sich Lithiumhydroxid und Kaliumhydroxid- einzeln oder im Gemisch.

Zweckmäßig wird das eingesetzte Alkalihydroxid bzw. die Alkaliverbindung oder deren Gemische in der zu veresternden Säure aufgelöst. Man kann aber auch aus der Alkaliverbindung, z.B. Alkalihydroxiden, Alkalicarbonaten oder Alkalibicarbonaten und der Säure erst ihr Alkalisalz als Katalysator herstellen und kann dann das Alkalisalz der Säure in dem Reaktionsgemisch lösen bzw. bei der Durchführung der Additionsreaktion durch Erhitzen in Lösung bringen.

Im allgemeinen ist es ausreichend, von etwa 0,005 % bis etwa 0,5 % Alkalimetallverbindung der schon genannten Art, bezogen auf das Gewicht der esterbildenden Komponenten, für die Additionsreaktion zuzufügen.

Weitere Bestandteile der Komponente B sind Verbindungen
- B2: ausgewählt aus Estern von aliphatischen Alkoholen und α,β-olefinisch ungesättigten Carbonsäuren,
- B3: Estern von aliphatischen Diolen oder Polyolen mit n Hydroxylgruppen pro Molekül und 1 bis n-1 mol/mol an α,β-olefinisch ungesättigten Carbonsäuren, wobei n mindestens 2 ist,
- B4: Amiden, N-substituierte Amiden und Nitrilen von α,β-olefinisch ungesättigten Carbonsäuren,
- B5: Vinylverbindungen ausgewählt aus Vinylestern von aliphatischen Monocarbonsäuren mit 1 bis 20 Kohlenstoffatomen, Vinylketonen, Vinylhalogeniden, Vinylaromaten und Vinylidenhalogeniden,
enthalten, wobei bevorzugt jeweils mindestens eine Verbindung aus jeder der Gruppen B1 und B2 enthalten ist und Verbindungen aus den Gruppen B3, B4 und B5 optional enthalten sein können.

Geeignete Verbindungen der Gruppe B2 sind besonders Ester von aliphatischen Alkoholen mit bevorzugt 1 bis 30 Kohlenstoffatomen und α,β-olefinisch ungesättigten Carbonsäuren mit bevorzugt 3 bis 22 Kohlenstoffatomen, z.B. Acryl- und Methacrylsäureester von einwertigen Alkoholen mit 1 bis 10 C-Atomen.

Insbesondere geeignete Verbindungen B2 sind z.B. die Alkylester, z.B. Methyl-, Äthyl-, Propyl-, 2-Äthylhexyl-, Butyl-, Isobutyl-, tert.-Butyl-, Hexyl-, Cyclohexyl-, Nonyl-, Lauryl-, Stearyl-, 3,3,5-Trimethylcyclohexyl, 4-tert.-Butylcyclohexyl-, Isobornyl-(inkl. deren Strukturisomere)-ester der Acryl- bzw. Methacrylsäure.

Auch in den weiter unten genannten Komponenten schließt der Begriff "α,β-ungesättigte Carbonsäuren" auch die Dicarbonsäuren wie beispielsweise Maleinsäure, Fumarsäure und Itaconsäure sowie deren Halbester ein.

Weitere Bestandteile der Komponente B2 können halogenierte Ester sein, wie z.B. Trifluoräthyl-, Pentafluor-n-propyl- und Hexachlorbicycloheptenyl-acrylat oder -methacrylat, Methyl-2-fluoracrylat oder Dibromphenyl-2-fluoracrylat.

Als Komponente B2 können auch Glycidylester der Acryl- oder Methacrylsäure, vorzugsweise Glycidylacrylat und Glycidylmethacrylat sowie Malein- oder Fumarsäurediglycidylester verwendet werden, ebenso auch Monomere, die Silangruppen enthalten. Typische Beispiele dieser Monomeren sind Acrylatoalkoxysilane, wie γ-(Meth)Acryloxypropyltrimethoxysilan, γ-(Meth)Acryloxypropyltris(2-methoxyäthoxy)silan und Vinylalkoxysilane, wie Vinyltrimethoxysilan, Vinyltriäthoxysilan und Vinyltris(2-methoxyäthoxy)silan. Hierunter fallen auch entsprechende Acyloxysilane.

Besonders bevorzugt sind die niedrigen Alkylester (mit 1 bis 4 Kohlenstoffatomen im Alkylrest) der Acryl- und Methacrylsäure, insbesondere Methylmethacrylat.

Die Verbindungen B3 sind Ester von aliphatischen Diolen oder Polyolen mit 2 bis 30 Kohlenstoffatomen und n Hydroxylgruppen pro Molekül und 1 bis n-1 mol/mol an α,β-olefinisch ungesättigten Carbonsäuren mit 3 bis 22 Kohlenstoffatomen, wobei n mindestens 2 ist. Diese sind herstellbar durch Verestern eines Polyols mit n Hydroxylgruppen mit 1 bis n-1 mol einer α,β-olefinisch ungesättigten Carbonsäure. Bevorzugt sind Halbester mit einer primären Hydroxylgruppe wie die Hydroxyalkylacrylate und -methacrylate mit 2 bis 30 Kohlenstoffatomen im Alkylenrest, wie beispielsweise Hydroxyäthylacrylat, Hydroxypropylacrylat, Hydroxybutylacrylat, Hydroxyamylacrylat, Neopentylglykolmonoacrylat, Hydroxyhexylacrylat, Hydroxyoctylacrylat und die entsprechenden Methacrylate. Als Beispiele für verwendbare Hydroxyalkylester mit einer sekundären Hydroxygruppe seien 2-Hydroxypropylacrylat, 2-Hydroxybutylacrylat, 3-Hydroxybutylacrylat und die entsprechenden Methacrylate genannt. Selbstverständlich können jeweils auch die entsprechenden Ester anderer α,β-ungesättigter Carbonsäuren wie z.B. der Crotonsäure, der Isocrotonsäure und der Vinylessigsäure eingesetzt werden. Weitere geeignete Verbindungen sind Halbester von α,β-ungesättigten Monocarbonsäuren mit cycloaliphatischen Diolen wie 1,4-Cyclohexandimethanol, 3(4),8(9)-Bis-(hydroxymethyl)-tricyclo[5.2.1.0^{2.6}]decan oder Dihydroxyaromaten wie Brenzkatechin und Hydrochinon und Bisphenol A. Ebenfalls geeignet sind Monoester von aliphatischen und aromatischen Polyolen wie Glycerin-mono(meth)acrylat oder Mono(meth)acrylate von Sorbit, Pentaerythrit oder Glykosiden.

Geeignete Verbindungen der Gruppe B4 sind Amide, N-substituierte Amide wie N-Alkylamide und N,N-Dialkylamide sowie Nitrile von α,β-olefinisch ungesättigten Carbonsäuren mit bevorzugt 3 bis 22 Kohlenstoffatomen, insbesondere die Derivate der Acryl- und Methacrylsäure wie Acrylamid, Methacrylamid, N-Alkyl- und N,N-Dialkyl(meth)acrylamid mit 1 bis 6 Kohlenstoffatomen im Alkylrest, Acrylnitril und Methacrylnitril.

Geeignete Verbindungen der Gruppe B5 sind Vinylester von aliphatischen Monocarbonsäuren mit 1 bis 20 Kohlenstoffatomen wie Vinylacetat und Versaticsäurevinylester, Vinylketone und Vinyläther mit 4 bis 20 Kohlenstoffatomen wie Methyl- und Äthyl-vinylketon und Methyl- und Isobutyl-vinyläther, Vinylhalogenide und Vinylidenhalogenide wie Vinyl- und Vinylidenchlorid, Vinylaromaten wie Styrol, α-Methylstyrol, Vinyltoluole und Vinylnaphthalin.

Ein Beispiel aus der Gruppe B5 ist Styrol als preiswertes Standardmonomer. Es wird aber vorzugsweise in beschränkter Menge (bis zu 45 %, bevorzugt bis zu 35, insbesondere bis zu 30 %) oder überhaupt nicht eingesetzt.

Im Ausgangsmonomergemisch besteht die Komponente B bevorzugt aus einem Gemisch von
- B1: 1 bis 50 %, bevorzugt 3,5 bis 40 %, von α,β-olefinisch ungesättigten Carbonsäuren,
- B2: 5 bis 99 %, bevorzugt 5 bis 96,5 %, von Estern von aliphatischen Alkoholen mit 1 bis 30 Kohlenstoffatomen und α,β-olefinisch ungesättigten Carbonsäuren,
- B3: 0 bis 45 %, vorzugsweise 1 bis 25 %, von Estern von aliphatischen Diolen oder Polyolen mit 2 bis 30 Kohlenstoffatomen und n Hydroxylgruppen pro Molekül und 1 bis n-1 mol/mol an α,β-olefinisch ungesättigten Carbonsäuren, wobei n mindestens 2 ist,
- B4: 0 bis 45 %, bevorzugt 1 bis 25 %, von Amiden, N-substituierten Amiden und Nitrilen von α,β-olefinisch ungesättigten Carbonsäuren,
- B5: 0 bis 45 %, bevorzugt 1 bis 40 %, von Vinylverbindungen ausgewählt aus Vinylestern von aliphatischen Monocarbonsäuren mit 1 bis 20 Kohlenstoffatomen, Vinylketonen, Vinyläthern, Vinylhalogeniden, Styrol, Vinyltoluol und Vinylidenhalogeniden,
wobei die Summe der Massenanteile sich stets auf 100 % ergänzt. Besonders geeignete Monomere sind
- B1: Acrylsäure, Methacrylsäure, Maleinsäure und Fumarsäure,
- B2: Methyl-, Äthyl-, Propyl-, Isopropyl-, Butyl-, t-Butyl-, 2-Äthylhexyl-, Lauryl-, 4-tert.-Butylcyclohexyl- und Isobornylester der Acryl- und Methacrylsäure, Glycidylester der Acryl- oder Methacrylsäure oder Monomere, die Silangruppen enthalten,
- B3: Hydroxyäthyl-, Hydroxypropyl-, Hydroxybutyl-, 2-Hydroxypropyl-, 2-Hydroxybutylacrylat und die entsprechenden Methacrylate,
- B4: Acrylamid, N-Methylacrylamid, N,N-Dimethylacrylamid, Acrylnitril und die entsprechenden Methacrylsäurederivate,
- B5: vinylaromatischen Verbindungen wie Styrol, Vinyltoluole und Versaticsäurevinylester.

Die Komponente C besteht aus Oligomeren oder Polymeren auf Basis von Polyestern, Polyamiden, Polyacrylaten, Polyolefinen und Polyäthern. Bevorzugt sind die Verbindungen, die die Komponente C bilden, ausgewählt aus
- C1: Polyestern aus aliphatischen Diolen und aliphatischen Dicarbonsäuren und/oder Lactonen, wobei bis zu 5 % der Carbonsäuren und/oder der Diole durch Polycarbonsäuren bzw. durch Polyole mit jeweils drei oder mehr funktionellen Gruppen ersetzt werden können, und bis zu 5 % der Carbonsäuren olefinisch ungesättigt sein können,
- C2: Polyamiden aus aliphatischen Dicarbonsäuren, aliphatischen Diaminen und/oder Lactamen, wobei bis zu 5 % der Carbonsäuren und/oder der Diamine durch Polycarbonsäuren bzw. durch Polyamine mit jeweils drei oder mehr funktionellen Gruppen ersetzt werden können, und bis zu 5 % der Carbonsäuren olefinisch ungesättigt sein können,
- C3: Polyäthern aus aliphatischen Diolen, die gegebenenfalls Aminoendgruppen tragen können, sowie Polyäthern, die aus Glycidyläthern von aromatischen oder aliphatischen Di- und/oder Polyhydroxyverbindungen gebildet werden können, wobei bis zu 5 % der Hydroxyverbindungen olefinisch ungesättigt sein können,
- C4: Polymeren, die durch gemeinsame Polymerisation von Verbindungen mit einer olefinischen Doppelbindung und mindestens 2 %, bezogen auf die Masse der Monomeren, an Verbindungen mit mindestens zwei olefinischen Doppelbindungen erhältlich sind.

Geeignet sind beispielsweise Umsetzungsprodukte aus Acryl- und/oder Methacrylsäure oder Hydroxyäthylacrylat und/oder -methacrylat mit Lactamen oder Lactonen. Andere geeignete Verbindungen sind Ester von α,β-ungesättigten Carbonsäuren und den oligomeren Alkylenglykolen wie Oligo-äthylen- oder -propylenglykol. Auch aus der Reaktion von Verbindungen aus der Gruppe A mit dritten, vorzugsweise niedermolekularen Verbindungen mit mindestens zwei funktionellen Gruppen können geeignete Verbindungen C entstehen. Beispiele hierfür sind Umsetzungsprodukte aus Epoxyverbindungen, Lactonen oder cyclischen Carbonaten oder Acetalen mit Dicarbonsäuren; sowie Umsetzungsprodukte von Lactonen oder cyclischen Säureanhydriden mit zwei- oder mehrwertigen Alkoholen oder mit hydroxyfunktionellen Monomeren. Die Molmassen der eingesetzten Komponenten sind im Grenzbereich zwischen Oligomer und Polymeren und betragen bis zu 2000 g/mol, insbesondere bis zu 1000 g/mol.

Die funktionellen Gruppen der Verbindungen, die die Komponente C bilden, sind ausgewählt aus Carboxyl-, Hydroxyl-, Amino-, Säureamid-, Hydrazin- und Hydrazidgruppen, Glycidylgruppen und olefinischen Doppelbindungen, bevorzugt sind olefinische Doppelbindungen, Hydroxyl-, Amino- und Carboxylgruppen. Unter olefinischen Doppelbindungen verstehen wir auch solche, die α,β-ungesättigte Carbonsäureester darstellen.

Im Ausgangsmonomerengemisch besteht die Komponente C bevorzugt aus Umsetzungsprodukten von Hydroxyäthylacrylat und/oder -methacrylat und mindestens 2 Mol ε-Caprolacton pro 1 mol des Hydroxyacrylats. Bevorzugt werden auch Reaktionsprodukte von Polyäthylen- oder Polypropylenglykolmonoacrylat und/oder -methacrylat mit mindestens 2 Molekülen Äthylen- und/oder Propylenglykolen eingesetzt, die entweder unverkappt oder verkappt sein können.

Die Oligomeren oder Polymeren (Komponente C), die entweder eine funktionelle Gruppe oder eine polymerisierbare Einheit besitzen, müssen in einer solchen Menge angeboten werden, daß auch niedrigsiedende Komponenten von B und Spaltprodukte des Initiators nicht in einem erheblichen Maß verdampfen. Die Beherrschbarkeit der Gesamtreaktion wird durch den Einsatz der Komponente C sichergestellt.

Für die erfindungsgemäßen Copolymerisate kommen die üblichen radikalbildenden Verbindungen als Polymerisationsinitiatoren einzeln oder im Gemisch in Frage. Solche sind z.B. aliphatische Azoverbindungen, Diacylperoxide, Peroxydicarbonate, Alkylperester, Alkylhydroperoxide, Perketale, Dialkylperoxide oder Ketonperoxide. Bevorzugt werden Dialkylperoxide, wie Di-t-butylperoxid oder Di-t-amylperoxid und Alkylperester, wie t-Butylperoxy-2-äthylhexanoat oder t-Amylperoxy-2-äthylhexanoat. Der Anteil der Initiatoren kann z.B. 0,5 bis 5, vorzugsweise bis 4, insbesondere bis 3 % betragen, bezogen auf die Gesamtmasse der Ausgangskomponenten. Die Initiatoren können gemeinsam mit den Monomeren oder getrennt von ihnen zugesetzt werden. Während der Polymerisation können weitere Mengen von Initiatoren, gegebenenfalls in Mischung mit Reglern, zugefügt werden.

Als Regler lassen sich die üblichen Verbindungen wie z.B. Alkylmercaptane verwenden, bevorzugt auch Alkylendithiole wie beispielsweise 2,3-Butan- oder 1,5-Pentandithiol. Erfindungsgemäß werden jedoch bevorzugt keine Regler eingesetzt.

Die Polymerisation wird vorzugsweise in Substanz (am Polymerisationsende als "Massepolymerisation") vorgenommen. Unter dem Begriff "Substanzpolymerisation" ist eine Polymerisation zu verstehen, die in der Regel ohne Lösemittel durchgeführt wird. In manchen Fällen ist jedoch auch die Anwesenheit von einem geringen Lösemittelanteil möglich, nämlich bis zu 20, vorzugsweise bis zu 10 und insbesondere bis zu 5 %, bezogen auf die Masse der Ausgangskomponenten. Dabei kann auch unter erhöhtem Druck polymerisiert werden. Jedoch ist das Arbeiten ohne Lösemittel vorzuziehen.

Die erfindungsgemäßen Verfahren können diskontinuierlich (sogenanntes "batch"-Verfahren) oder kontinuierlich durchgeführt werden. Bei den mehrstufigen Verfahren ist auch eine Ausführungsform möglich, in der die jeweiligen Umsetzungsstufen in separaten Behältern durchgeführt werden. Ebenfalls ist es möglich, die Umsetzung der ersten Stufe kontinuierlich und die der zweiten Stufe diskontinuierlich durchzuführen. Hierbei können auch blockartige Copolymere hergestellt werden.

Geeignete Lösemittel für die erfindungsgemäß erhaltenen Produkte sind z.B. aliphatische, cycloaliphatische und/oder aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat; Äther, wie Äthylenglykolacetatmonoäthyl-, methyl- oder butyläther; Glykole; Alkohole; Ketone wie Methylamylketon, Methylisobutylketon; Lactone oder dergleichen oder deren Gemische derartiger Lösemittel. Als Lösemittel sind auch Umsetzungsprodukte von Lactonen mit Glykolen oder Alkoholen einsetzbar.

Die hergestellten Hydroxyl- und Carboxyl-Gruppen-haltigen Copolymerisate können in einer weiteren Stufe noch modifiziert werden, z.B. durch Umsetzen mit Isocyanat-Verbindungen. Diese Isocyanat-Verbindungen schließen beispielsweise auch alle niedermolekularen Harnstoffderivate ein, die in der Lackindustrie zu "sag controlled"-Acrylatharzen führen. Hierzu werden die Copolymerisate und Monoamine vorgelegt und geeignete Isocyanate eingerührt.

Die erfindungsgemäßen Copolymerisate eignen sich besonders gut für lacktechnische Anwendungen in 1- bzw. 2-Komponenten-Systemen, insbesondere für sogenannte "high-solid" " Systeme, also für lösemittelhaltige Mischungen mit hohem Festkörpergehalt.

Gegenstand der vorliegenden Erfindung sind weiterhin Beschichtungsmittel, die die erfindungsgemäßen, hydroxylgruppenhaltigen Copolymerisate als Bindemittelkomponente enthalten. Die Copolymerisate können in Gegenwart von geeigneten Vernetzern kalt oder bei erhöhter Temperatur gehärtet werden.

Als Härterkomponente eignen sich in diesen Beschichtungsmitteln Aminoplastharze, Polyisocyanate sowie Anhydridgruppen enthaltende Verbindungen einzeln oder in Kombination. Der Vernetzer wird jeweils in solch einer Menge zugesetzt, daß das Molverhältnis der OH-Gruppen des Copolymerisats zu den reaktiven Gruppen des Vernetzers zwischen 0,3 : 1 und 3 : 1 liegt.

Als Härterkomponente geeignete Aminoplastharze sind bevorzugt Harnstoff-, Melamin- und/oder Benzoguanaminharze. Es handelt sich hierbei um verätherte Harnstoff-, Melamin- bzw. Benzoguanamin-Formaldehyd-Kondensationsprodukte. Geeignete Mischungsverhältnisse liegen im Bereich von 50 : 50 bis 90 : 10 Copolymerisat / Aminoharzvernetzer auf Festharz bezogen. Auch geeignete Phenolharze und ihre Derivate können als Härter eingesetzt werden. Diese Vernetzer führen in Gegenwart von Säuren, z.B. p-Toluolsulfonsäure zur Aushärtung der Beschichtung. Die Heißhärtung kann in üblicher Weise bei Temperaturen von 80 bis 200 °C, z.B. in 10 bis 30 Minuten vorgenommen werden.

Für die Härtung der erfindungsgemäßen Produkte unter Vernetzung eignen sich auch Polyisocyanate, besonders bei moderaten Temperaturen und bei Raumtemperatur. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie beispielsweise Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-lsocyanato-3,3,5-trimethyl-5-isocyanatomethyl-cyclohexan (IPDI), 2,4'- und/oder 4,4'-Diisocyanato-dicyclohexylmethan, 2,4'- und/oder 4,4'-Diisocyanato-diphenylmethan oder Gemische dieser Isomeren mit ihren höheren Homologen, wie sie in an sich bekannter Weise durch Phosgenierung von Anilin-Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate, die in der Beschichtungstechnologie üblicherweise eingesetzt werden. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie z.B. in der EP-A-0 470 461 beschrieben.

Zu den besonders bevorzugten modifizierten Polyisocyanaten gehören das N,N',N"-Tris-(6-isocyanatohexyl)-biuret und seine Gemische mit seinen höheren Homologen, sowie das N,N',N"-Tris-(6-isocyanatohexyl)-isocyanurat bzw. dessen Gemische mit seinen höheren, mehr als einen Isocyanuratring aufweisenden Homologen.

Die Vernetzung kann durch Zusatz von flüchtigen organischen Säuren wie Ameisensäure und Essigsäure oder organischen Metallverbindungen, wie Zinnverbindungen und gegebenenfalls tertiären Aminen, vorzugsweise Diäthyläthanolamin, katalysiert werden. Entsprechende Zinnverbindungen sind beispielsweise Dibutylzinndilaurat, Dibutylzinndiacetat und Dibutyloxozinn.

Für eine Härtung bei erhöhter Temperatur kommen zusätzlich verkappte Polyisocyanate, Polycarbonsäuren bzw. deren Anhydride in Frage.

Die erfindungsgemäßen Copolymerisate eignen sich besonders gut zur Herstellung von festkörperreichen, lösemittelhaltigen Klarlacken. Außerdem eignen sie sich gut zur Herstellung von festkörperreichen, lösemittelhaltigen pigmentierten Lacken.

Diese festkörperreichen Beschichtungsmittel finden insbesondere in der Automobilserien- und -reparaturlackierung, der Industrielackierung, der Holzlackierung sowie im Bereich der Beschichtung von Textilien, Leder, Papier und Baustoffen ihre Anwendung.

Die erfindungsgemäßen Copolymerisate eignen sich auch gut zur Herstellung von Pulverlacken in Verbindung mit Polycarbonsäureanhydriden. Sie lassen sich auch mit Polycarbonsäureanhydriden umsetzen, und die Produkte können als Härter für verschiedene Kunstharze, insbesondere Epoxyharze, eingesetzt werden. Von besonderem Interesse ist die Verwendung der erfindungsgemäßen Produkte zusammen mit speziellen Polycarbonsäureteilestern oder Derivaten von Polycarbonsäuren bzw. deren Anhydriden oder Esteranhydriden.

In Beschichtungsmitteln, die mit den erfindungsgemäßen Copolymerisaten hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufsmittel, Silikonöle, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate, viskositätskontrollierende Zusätze, Mattierungsmittel, UV-Absorber und Lichtschutzmittel, Antioxidantien und/oder Peroxidzersetzer, Entschäumer, Netzmittel, aktive Verdünner-Reaktivverdünner.

Die Beschichtungsmittel können nach bekannten Methoden, beispielsweise durch Streichen, Tauchen, Fluten oder mit Hilfe von Walzen oder Rakeln, insbesondere aber durch Spritzen, elektrostatische und tribologische Auftragung auf das jeweilige Substrat aufgetragen werden. Sie können in der Wärme appliziert werden, gegebenenfalls können sie durch Eindrücken von superkritischen Lösemitteln (z.B. CO₂) in eine applikationsfertige Form gebracht werden.

Die Kalthärtung der Lacke erfolgt bei Temperaturen im Bereich von -20 bis + 100 °C, vorzugsweise von -10 bis + 60 °C. Die Heißhärtung kann in üblicher Weise bei Temperaturen von 80 bis 200 °C, z.B. in 10 bis 30 Minuten vorgenommen werden.

Die Erfindung wird in den folgenden Beispielen näher erläutert. In den Ausführungsbeispielen ebenso wie im gesamten Text bedeuten alle Prozentangaben Massenanteile, sofern nicht anders gekennzeichnet.

### Beispiele:

### I. Copolymerherstellung

### la.) Herstellung der Copolymerisate mit Polypropylenglykolmonomethacrylat

In einem mit Rührwerk, Inertgaseinleitung, Heiz- und Kühlsystem sowie einer Zugabeeinrichtung ausgestatteten Reaktor wird der Glycidylester einer α,α-Dialkylalkanmonocarbonsäure [z.B. Glycidylester der ®Versatic-10-Säure (Handelsname: Cardura® E 10, Shell Chemicals)] (z.T. mit Lösemittel oder Lösemittelgemischen) vorgelegt und unter Inertgas auf die gewünschte Temperatur aufgeheizt. Dann wird innerhalb 6 Stunden die Monomerenmischung (z.T. mit Lösemitteln oder Lösemittelgemischen) zusammen oder getrennt mit dem Initiator (z.T. in Lösemittel oder Lösemittelgemischen) gleichmäßig zudosiert. Anschließend wird noch 2 Stunden nachpolymerisiert, bis ein Umsatz von mindestens 95 % erreicht ist.

Die Copolymerisate werden in geeigneten Lösemitteln oder Lösemittelgemischen angelöst.

Es werden folgende Copolymerisate hergestellt. Die genauen Ansätze in Gewichtsteilen, Reaktionsbedingungen und Kennzahlen der Produkte sind aus nachstehenden Tabellen zu entnehmen.

**Tabelle 1:**

| **Herstellung und Eigenschaften der Copolymerisate A** | | |
|---|---|---|
| **Ansatz** | **Vergleich** | **A** |
| organische Verbindungen | | |
| Glycidylester | 13,78 | 13,78 |
| Acrylsäure | 5,44 | 5,44 |
| Hydroxyäthylmethacrylat | 10,12 | 10,12 |
| Polypropylenglykolmonomethacrylat (n = 6) | - | 1,31 |
| n-Butylacrylat | 7,50 | 6,18 |
| Methylmethacrylat | 44,48 | 44,48 |
| Styrol | 18,68 | 18,68 |
| Initiator | Di-tert.-Amylperoxid | Di-tert.-Amylperoxid |
| | 1,50 | 1,50 |
| Polymerisationstemperatur (°C) | 175 °C | 175 °C |
| FK (%) nach Polymerisation | Polymerisation nicht beherrschbar (zu starker Rückfluß) | 98,5 |
| FK (%) Lff. (in Butylacetat) | | 69,7 |
| | | |
| | | |
| Säurezahl (mg KOH/g FH) | | 12,7 |
| Hydroxyizahl (mg KOH/g FH) | | 80 |
| Viskosität (mPas), 23 °C (Lff.) | | 3510 |
| Viskosität (mPas), 23°C | | 55 |
| (50%ig in BuAc) | | |
| GPC (PS-Eichung) | | |
| Mw (g/mol) | | 4970 |
| Mn (g/mol) | | 1960 |
| U = Mw/Mn | | 2,5 |
| Hazen-Farbzahl | | 46 |
| Aussehen | | transparent |
| FK: Festkörper n: mittlerer Polymerisationsgrad des Polypropylenglykols | | |
| FH: Festharz | | |
| Lff: Lieferform GPC:M_{w}, Mₙ mittlere Molmasse (Gewichts-, Zahlen-mittel), Millipore® Waters Chromatographie System 860 Pumpe: Waters Model 590, Rl-Detektor: Waters Model 410 Säulensatz: Waters Ultrastyragel 1 x 1000 Å + 1 x 500 Å + 1 x 100 Å (Ångström) Lösungsmittel: Tetrahydrofuran bei 40 °C Durchfluß: 1 ml/min., Konzentration: 1 %ig auf Festkörper Kalibrierung: Polystyrol (Fa. PSS, Mainz) Bestimmung der Kenndaten: Säurezahl, Hydroxylzahl und Viskosität (Normen siehe "Analytische Bestimmungsmethoden" (Broschüre: Kunstharze Hoechst AG, Ausgabe 1982)) Hazen-Farbzahl nach DIN 53 995 | | |

### Ergebnis:

Das erfindungsgemäße Copolymerisat A läßt sich trotz hoher Polymerisationstemperatur und hohem Gehalt an Methylmethacrylat herstellen. Das funktionelle Copolymerisat weist geringe Molmassen (M_{w} kleiner als 10000 g/mol) auf.

**Tabelle 2:**

| **Herstellung und Eigenschaften der Copolymerisate B** | | |
|---|---|---|
| **Ansatz** | **Vergleich** | **B** |
| organische Verbindungen | | |
| Glycidylester | 14,00 | 14,00 |
| Acrylsäure | 5,53 | 5,53 |
| Hydroxyäthylmethacrylat | 10,29 | 10,29 |
| Polypropylenglykolmonomethacrylat (n = 6) | - | 2,66 |
| n-Butylacrylat | 3,45 | 0,79 |
| Methylmethacrylat | 66,73 | 66,73 |
| Styrol | - | - |
| Initiator | Di-tert.-Amylperoxid | Di-tert.-Amylperoxid |
| | 1,50 | 1,50 |
| Polymerisationstemperatur (°C) | 175 °C | 175 °C |
| FK (%) nach Polymerisation | Polymerisation nicht beherrschbar (zu starker Rückfluß) | 98,7 |
| FK (%) Lff. (in Butylacetat) | | 69,9 |
| Säurezahl (mg KOH/g FH) | | 13,1 |
| Hydroxylzahl (mg KOH/g FH) | | 80,5 |
| Viskosität (mPas), 23 °C (Lff.) | | 3360 |
| Viskosität (mPas), 23°C | | 63 |
| (50%ig in BuAc) | | |
| GPC (PS-Eichung) | | |
| Mw (g/mol) | | 5040 |
| Mn (g/mol) | | 2100 |
| U = Mw/Mn | | 2,4 |
| Hazen-Farbzahl | | 37 |
| Aussehen | | transparent |
| FK: Festkörper n: mittlerer Polymerisationsgrad des Polypropylenglykols FH: Festharz Lff: Lieferform GPC: M_{w}, Mₙ mittlere Molmasse (Gewichts-, Zahlen-mittel), Millipore® Waters Chromatographie System 860 Pumpe: Waters Model 590, Rl-Detektor: Waters Model 410 Säulensatz: Waters Ultrastyragel 1 x 1000 Å + 1 x 500 Å + 1 x 100 Å (Ångström) Lösungsmittel: Tetrahydrofuran bei 40 °C Durchfluß: 1 ml/min., Konzentration: 1 %ig auf Festkörper Kalibrierung: Polystyrol (Fa. PSS, Mainz) Bestimmung der Kenndaten: Säurezahl, Hydroxylzahl und Viskosität (Normen siehe "Analytische Bestimmungsmethoden" (Broschüre: Kunstharze Hoechst AG, Ausgabe 1982)) Hazen-Farbzahl nach DIN 53 995 | | |

### Ergebnis:

Das erfindungsgemäße Copolymerisat B läßt sich trotz hoher Polymerisationstemperatur und sehr hohem Gehalt an Methylmethacrylat herstellen.

Das funktionelle Copolymerisat enthält kein Styrol und weist eine geringe Molmasse (M_{w} kleiner als 10000 g/mol) auf.

### Ib.) Herstellung der Copolymerisate mit Polyesterolmonomethacrylat

In einem mit Rührwerk, Inertgaseinleitung, Heiz- und Kühlsystem sowie Zugabeeinrichtungen ausgestatteten Reaktor wird der Glycidylester einer α,α-Dialkylalkanmonocarbonsäure [z.B. Glycidylester der ®Versatic-10-Säure (Handelsname: Cardura® E 10, Shell Chemicals)] sowie eine geringe Menge ε-Caprolacton mit etwas Hydroxyäthylmethacrylat (z.T in Lösemittel oder Lösemittelgemischen) vorgelegt und unter Inertgas auf die gewünschte Temperatur aufgeheizt.

Dann wird innerhalb 6 Stunden die Monomerenmischung (z.T. mit Lösemittel oder Lösemittelgemischen) zusammen oder getrennt mit dem Initiator (z.T. in Lösemittel oder Lösemittelgemischen) gleichmäßig zudosiert.

Nach Dosierende wird die angegebene Menge ε-Caprolacton zugegeben und dann noch 2 Stunden nachpolymerisiert, bis ein Umsatz von mindestens 95 % erreicht ist.

Die Copolymerisate werden in geeigneten Lösemitteln oder Lösemittelgemischen angelöst.

Es werden folgende Copolymerisate hergestellt. Die genauen Ansätze in Gewichtsteilen, Reaktionsbedingungen und Kennzahlen der Produkte sind aus nachstehenden Tabellen zu entnehmen.

**Tabelle 3:**

| **Herstellung und Eigenschaften des Copolymerisates C** | | |
|---|---|---|
| **Ansatz** | **Vergleich** | **C** |
| I Vorlage: | | |
| Glycidylester | 15,00 | 15,00 |
| ε-Caprolacton* | - | 1,02 |
| Hydroxyäthylmethacrylat* | - | 1,16 |
| Temperatur | 175 °C | 175 °C |

| II Monomere: | | |
|---|---|---|
| Acrylsäure | 5,73 | 5,73 |
| n-Butylacrylat | 0,10 | 0,10 |
| Hydroxyäthylmethacrylat | 10,87 | 9,71 |
| Methylmethacrylat | 30,44 | 30,44 |
| Styrol | 28,78 | 28,78 |
| Initiator: Di-tert.-Amylperoxid | 1,50 | 1,50 |
| Polymerisationstemperatur | 175 °C | 175 °C |
| Polymerisationsverlauf | Rückfluß: stark zunehmend | geringer Rückfluß |

| III Nachgabe: | | |
|---|---|---|
| ε-Caprolacton | 9,08 | 8,06 |
| Verfahrenssicherheit | mangelhaft | gewährleistet |
| FK (%) nach Polymerisation | Ansatz verworfen | 98,2 |
| FK (%) Lff. (in Butylacetat) | | 70,1 |
| Säurezahl (mg KOH/g FH) | | 12,5 |
| Hydroxylzahl (mg KOH/g FH) | | 89,0 |
| Viskosität (mPas), 23 °C (Lff.) | | 2410 |
| Viskosität (mPas), 23°C (50%ig in BuAc) | | 58 |
| GPC (PS-Eichung) Mw (g/mol) | | 5100 |
| Mn (g/mol) | | 2120 |
| U = Mw/Mn | | 2,4 |
| Hazen-Farbzahl | | 24 |
| Aussehen | | transparent |

| | | |
|---|---|---|
| FK: Festkörper FH: Festharz Lff: Lieferform *Vorreaktion: Bildung des Polyesterolmonomethacrylates GPC:M_{w}, Mₙ mittlere Molmasse (Gewichts-, Zahlen-mittel), Millipore® Waters Chromatographie System 860 Pumpe: Waters Model 590, Rl-Detektor: Waters Model 410 Säulensatz: Waters Ultrastyragel 1 x 1000 Å + 1 x 500 Å + 1 x 100 Å (Ångström) Lösungsmittel: Tetrahydrofuran bei 40 °C Durchfluß: 1 ml/min., Konzentration: 1 %ig auf Festkörper Kalibrierung: Polystyrol (Fa. PSS, Mainz) Bestimmung der Kenndaten: Säurezahl, Hydroxylzahl und Viskosität (Normen siehe "Analytische Bestimmungsmethoden" (Broschüre: Kunstharze Hoechst AG, Ausgabe 1982)) Hazen-Farbzahl nach DIN 53 995 | | |

### Ergebnis:

Das erfindungsgemäße Copolymerisat C läßt sich trotz hoher Polymerisationstemperatur und sehr hohem Gehalt an Methylmethacrylat herstellen.

Das funktionelle Copolymerisat weist geringe Molmassen (M_{w} kleiner als 10000 g/mol) auf.

### II.) Herstellung der Lacke

Zur Herstellung der erfindungsgemäßen härtbaren Beschichtungsmittel werden die Komponenten bestehend aus einem erfindungsgemäßen Copolymerisat oder einer Mischung mehrerer erfindungsgemäßer Copolymerisate mit den Hilfs- und Zusatzstoffen, Lösungsmitteln und Vernetzern im beschriebenen Mischungsverhältnis (Tabellen 4, 5, 6) gemischt und mit weiterem Verdünnungsmittel auf die Spritzviskosität von ca. 20 bzw. 21 Sekunden mit dem Auslaufbecher (DIN 53 211, 4 mm, 23 °C) eingestellt. Bei Komponenten mit niedriger Viskosität kann dies in Substanz erfolgen, wobei gegebenenfalls auf höhere Temperaturen erwärmt wird. Produkte höherer Viskosität werden - falls die härtbaren Mischungen nicht als Pulverlack eingesetzt werden - vor der Mischung in den erwähnten Verdünnungsmitteln gelöst oder dispergiert. Im Falle von pigmentierten Systemen wird zunächst in einem Dispergierschritt aus den entsprechenden Pigmenten zusammen mit dem erfindungsgemäßen Copolymerisat oder einer Mischung mehrerer erfindungsgemäßer Copolymerisate evtl. unter Zusatz eines geeigneten speziellen Anreibeharzes in einem Dispergieraggregat geeigneter Bauweise eine Pigmentpaste erzeugt. Diese wird so unter Zugabe weiteren Bindemittels auf Basis der Komponenten oder einer Mischung derselben oder aber eines Fremdharzes, das mit den übrigen Komponenten des Lacksystems verträglich ist, gemischt und unter Zufügung weiterer Verdünnungsmittel oder lacktypischer Zusätze komplettiert. Die Topfzeit und die Eigenschaften der resultierenden Filme hängen dabei von den Verfahrensbedingungen ab, d.h. von der Art und Menge der Ausgangsstoffe, Dosierung des Katalysators, der Temperaturführung etc., die Härtung kann diskontinuierlich betrieben oder kontinuierlich durchgeführt werden, beispielsweise mittels einer automatischen Lackiervorrichtung.

### a) Herstellung eines Klarlacks

Die neuen "high solid" Klarlacke werden nach der in Tabelle 4 gezeigten Formulierung hergestellt.

**Tabelle 4:**

| **Herstellung der "high solid" Klarlacke** | | | |
|---|---|---|---|
| | **AV** | **Copolymerisat A** | **Copolymerisat B** |
| Aussehen | transparent | transparent | transparent |
| FK (%) | 60 | 69,7 | 69,9 |
| OH-Zahl (mgKOH/g)/OH-Gehalt (%) | 85/2,6 | 80/2,4 | 80,5/2,4 |
| Visk. 50%ige Lösung (mPa·s) | - | 65 | 63 |
| Bindemittel (Lff.) | 82 | 82 | 82 |
| ®Tinuvin 292 | 0,5 | 0,5 | 0,5 |
| ®Tinuvin 1130 | 1,5 | 1,5 | 1,5 |
| Si Öl LO 50%, 10%ig | 1 | 1 | 1 |
| ®Solvesso 100 | 1,5 | 1,5 | 1,5 |
| Xylol | 2,5 | 2,5 | 2,5 |
| BuAc | 11 | 11 | 11 |
| ®Desmodur N 3390 | 18,7 | 17,6 | 17,7 |
| DIN-Becher, 4 mm (DIN 53 211) | DIN-4 | DIN-4 | DIN-4 |
| Auslaufzeit (s) | 21 | 21 | 21 |
| Lackbezeichnung | LA | A | B |
| ®Tinuvin 292 "HALS" (Fa. Ciba Geigy, Basel) ®Tinuvin 1130 UV-Absorber (Fa. Ciba Geigy, Basel) Si Öl LO 50% Verlaufsmittel Silikonöl(Fa. Wacker Chemie GmbH, Burghausen) ®Desmodur N 3390 Isocyanurat-Gruppen aufweisendes Polyisocyanat (Fa. Bayer AG, Leverkusen) BuAc Butylacetat AV Vergleichs-Bindemittel mit hohem Gehalt an Styrol (> 50%) | | | |

### b) Herstellung pigmentierter Decklacke

### b1) Herstellung der weißen Decklacke (Copolymere A/B)

Die weißen Decklacke werden nach der in Tabelle 5 gezeigten Formulierung hergestellt (angegeben sind jeweils Teile auf 100 Teile der Mischung). Die Zusätze und das Bindemittel werden in dem Lösungsmittelgemisch in einer Perlmühle auf eine Korngröße von unter 10 µm gemahlen.

**Tabelle 5:**

| **Herstellung der weißen Decklacke** | | | |
|---|---|---|---|
| Bindemittel-Komponenten | **AV** | **A** | **B** |
| Copolymerisate | 51,0 | 51,0 | 51,0 |
| Feststoffgehalt der Lösung (%) | 60 | 69,7 | 69,9 |
| Feststoff (Teile) | 30,6 | 35,5 | 35,7 |
| Lösemittelgemisch ^{∗} (1:3:1) | 13,65 | 9,05 | 8,95 |
| ®Additol XL 250 (Netzmittel) | 1,6 | 1,6 | 1,6 |
| ®Tinuvin 292 | 0,45 | 0,45 | 0,45 |
| ®Tinuvin 1130 | 0,9 | 0,9 | 0,9 |
| ®Kronos Titan 2310 | 32,0 | 36,6 | 36,7 |
| ®Additol XL 125 (Verlaufmittel) | 0,4 | 0,4 | 0,4 |
| Auslaufzeit (DIN 53211)⁺ in s | 80 | 80 | 80 |
| ®Desmodur N 75 (75 %ige Lösung Teile) | 12,4 | 13,6 | 13,6 |
| Feststoff (Teile) | 9,3 | 10,2 | 10,2 |
| Festkörpergehalt in % ^{#} | 55 | 65,5 | 65 |
| Bindemittel-Pigment-Festkörperverhältnis | 1:0,8 | 1:0,8 | 1:0,8 |

| | | | |
|---|---|---|---|
| ^{∗} Methoxypropylacetat: BuAc: ®Solvesso 100 | | | |
| ⁺ DIN-Becher mit 4 mm Auslauföffnung, 23°C | | | |
| ^{#} mit ca. 12 % Lösemittelgemisch auf Spritzviskosität von 20 s verdünnt ®Solvesso 100 (Fa. Deutsche Exxon Chemical GmbH, Köln) ®Additol (Fa. Hoechst, Frankfurt/Main) ®Kronos Titan (Fa. Kronos Titan GmbH, Leverkusen) ®Desmodur N 75 Polyisocyanat (Fa. Bayer AG, Leverkusen) AV: Vergleichs-Bindemittel mit hohem Gehalt an Styrol (> 50%) OH-Zahl: ca. 85 mg KOH/g Festharz | | | |

### b2) Herstellung der weißen Decklacke (Copolymer C)

Die weißen Decklacke werden nach der in Tabelle 6 gezeigten Formulierung hergestellt (angegeben sind jeweils Teile auf 100 Teile der Mischung). Die Zusätze und das Bindemittel werden in dem Lösungsmittelgemisch in einer Perlmühle auf eine Korngröße von unter 10 µm gemahlen.

**Tabelle 6:**

| **Herstellung der weißen Decklacke** | | |
|---|---|---|
| Bindemittel-Komponenten | **AV** | **C** |
| Copolymerisate | 51,0 | 51,0 |
| Feststoffgehalt der Lösung (%) | 60 | 70,1 |
| Feststoff (Teile) | 30,6 | 35,8 |
| Lösemittelgemisch ^{∗} (1:3:1) | 13,65 | 8,90 |
| ®Additol XL 250 (Netzmittel) | 1,6 | 1,6 |
| ®Tinuvin 292 | 0,45 | 0,45 |
| ®Tinuvin 1130 | 0,9 | 0,9 |
| ®Kronos Titan 2310 | 32,0 | 37,8 |
| ®Additol XL 125 (Verlaufmittel) | 0,4 | 0,4 |
| Auslaufzeit (DIN 53211)⁺ in s | 80 | 80 |
| ®Desmodur N 75 (75 %ige Lösung Teile) | 12,4 | 15,2 |
| Feststoff (Teile) | 9,3 | 11,4 |
| Festkörpergehalt in % ^{#} | 55 | 64,8 |
| Bindemittel-Pigment-Festkörperverhältnis | 1:0,8 | 1:0,8 |

| | | |
|---|---|---|
| ^{∗} Methoxypropylacetat: BuAc: ®Solvesso 100 | | |
| ⁺ DIN-Becher mit 4 mm Auslauföffnung, 23°C | | |
| ^{#} mit ca. 12 % Lösemittelgemisch auf Spritzviskosität von 20 s verdünnt ®Solvesso 100 (Fa. Deutsche Exxon Chemical GmbH, Köln) ®Additol (Fa. Hoechst, Frankfurt/Main) ®Kronos Titan (Fa. Kronos Titan GmbH, Leverkusen) ®Desmodur N 75 Polyisocyanat (Fa. Bayer AG, Leverkusen) AV: Vergleichs-Bindemittel mit hohem Gehalt an Styrol (> 50%) OH-Zahl: ca. 85 mg KOH/g Festharz | | |

Die Herstellung von Decklacken mit einem Lackfestkörpergehalt von bis zu 70 % läßt sich durch Änderung des Bindemittel-Pigment-Verhältnisses mit den erfindungsgemäßen Copolymerisaten problemlos erreichen.

### III.) Lacktechnische Prüfung

### a) Klarlacke

Die wie in II a) gefertigten Lacksysteme werden mittels 100 µm Rakel auf gereinigte Glasplatten appliziert und unter den Bedingungen der Lufttrocknung und forcierten Trocknung (45 Minuten bei 60 °C) geprüft.

**Tabelle 7a:**

| **Lacktechnische Prüfung der "high solid" Klarlacke** | | | |
|---|---|---|---|
| Lackbezeichnung | LA | A | B |
| Aussehen | transparent | transparent | transparent |
| Ausgng./Topfzeit | > 8h | > 8h | > 8h |
| Staubtrocknung | 10' | 12' | 9' |
| Klebfreitrocknung | 75' | 105' | 65' |
| FK-1h 125°C | 50 | 59,5 | 59 |

| Pendelhärte in s nach | | | |
|---|---|---|---|
| 24 h | 85 | 24 | 38 |
| 2 d | 130 | 66 | 99 |
| 6 d | 203 | 120 | 142 |
| 10 d | 211 | 198 | 201 |
| Beständigkeit gegen Superbenzin nach 10 d in Min. | 8 | > 30 | > 30 |

| Pendelhärte in s nach 45'60°C-Trocknung | | | |
|---|---|---|---|
| 24h | 154 | 82 | 92 |
| 2d | 185 | 133 | 152 |
| 5d | 203 | 205 | 198 |
| 45'60°C-Trocknung Beständigkeit gegen Superbenzin nach 5d in Min. | 5 | > 30 | > 25 |
| LA: Vergleichslack mit Bindemittel mit hohem Gehalt an Styrol > 50 % | | | |

**Tabelle 7b:**

| **Kurzbewitterung: Atlas UV/CON (Chicago, Illinois, USA*)** | | | |
|---|---|---|---|
| **Lackbezeichnung** | **LAV** | **A** | **B** |
| UV/CON | | | |
| 250 h | gelbstichig | farblos | farblos |
| 500 h | gelblich | " | " |
| 1000 h | " | " | " |
| 1500 h | " | " | " |

| Zyklen: | | | |
|---|---|---|---|
| 8 h UV 69 °C | | | |
| 4 h Kondensat 49 °C (Dunkelphase) | | | |

| | | | |
|---|---|---|---|
| * Vertretung: Fa. Brabender (Duisburg) | | | |

### Fazit:

Die erfindungsgemäßen Beschichtungsmittel weisen in praxisgerecht formulierten Klarlacken unkatalysiert sehr hohe Lackfestkörpergehalte, Beständigkeiten und hervorragende Wetterechtheiten auf.

### b) weiße Decklacke (pigmentiert)

Die wie in llb) gefertigten Lacksysteme werden mittels 100 µm Rakel auf gereinigten Glasplatten appliziert und unter Lufttrocknung geprüft.

**Tabelle 8:**

| Lacktechnische Prüfung der Decklacke auf Glas | | | | |
|---|---|---|---|---|
| **Lackbezeichnung** | **AV** | **A** | **B** | **C** |
| Topfzeit | > 8h | > 8h | > 8h | > 5,5h |
| Staubtrocknung | 12' | 15' | 12' | 18' |
| Klebfreitrocknung | 120' | 145' | 100' | 135' |
| FK-1h 125°C | 55 | 65,5 | 65 | 64,8 |

| Pendelhärte in s nach | | | | |
|---|---|---|---|---|
| 24 h | 67 | 25 | 45 | 39 |
| 2 d | 118 | 82 | 99 | 88 |
| 5 d | 161 | 130 | 153 | 105 |
| 10 d | 195 | 165 | 181 | 147 |
| Beständigkeit gegen Superbenzin nach 10 d in Min. | > 30 | > 30 | > 30 | > 15 |

| Reflektometerwert | | | | |
|---|---|---|---|---|
| 20° | 88 | 86 | 89 | 93 |
| 60° | 93 | 90 | 94 | 96 |
| Trockenschichtdicke 38-43 µm | | | | |

### Fazit:

Die erfindungsgemäßen Beschichtungsmittel weisen in praxisgerecht formulierten weißen Decklacken eine hohe Pigmentierbarkeit, sehr hohe Lackfestkörpergehalte, Beständigkeiten und einen hervorragenden Glanz auf.

Die wie in II gefertigten Lacksysteme werden durch 1,5 Spritzgänge auf phosphatierte Stahlbleche aufgebracht und nach 10 d geprüft. Die Ergebnisse sind in Tabelle 9 zusammengefaßt:

**Tabelle 9:**

| **Lacktechnische Prüfung der Decklacke auf Stahl** | | | | |
|---|---|---|---|---|
| **Lackbezeichnung** | **AV** | **A** | **B** | **C** |
| Erichsentiefung in mm | 9,0 | 9,1 | 8,7 | 9,2 |
| Trockenschichtdicke in µm | 40 | 43 | 43 | 45 |
| Haftung/Gitterschnitt GT | 0-1 | 0 | 0 | 1-2 |

| Reflektometerwert | | | | |
|---|---|---|---|---|
| 20° | 88 | 88 | 89 | 92 |
| 60° | 93 | 93 | 94 | 96 |

**Tabelle 10:**

| **Ergebnisse des Xenontest 1200 (60°) Schnellbewitterung in Anlehnung an DIN 53387-B (3 min Besprühen mit Wasser, 17 min trocken)** | | | | | |
|---|---|---|---|---|---|
| **relative Glanzhaltung %** | | **AV** | **A** | **B** | **C** |
| Belastung | 0 | 100 | 100 | 100 | 100 |
| in h | 500 | 98,9 | 99,1 | 99,5 | 97,5 |
| | 1000 | 96,7 | 98,7 | 99,1 | 94,2 |
| | 1500 | 95,6 | 97,8 | 99,0 | 90,7 |
| | 2000 | 94,4 | 97,5 | 98,9 | n.g. |
| n.g. nicht gemessen | | | | | |

### Fazit:

Die erfindungsgemäßen Beschichtungsmittel weisen in praxisgerechten formulierten weißen Decklacken auf Stahlblech eine hervorragende Oberflächengüte, Haftung und eine extrem hohe Glanzhaltung im Xenontest (Kurzbewitterung) auf.

Der Lack C zeichnet sich zusätzlich durch eine hervorragende Spritznebelaufnahme während der Applikation aus.

## Patentansprüche

1. Verfahren zur Herstellung von niedermolekularen funktionellen Polymerisaten, dadurch gekennzeichnet, daß vor Beginn der Polymerisation eine erste Menge M1 einer Mischung vorgelegt wird, die mindestens eine Komponente ausgewählt aus olefinisch ungesättigten Monomeren B und Verbindungen A enthält, die selbst nicht copolymerisierbar sind, die aber mit mindestens einem der Monomeren B unter Bildung einer copolymerisierbaren Additionsverbindung reagieren können, danach die Polymerisation durch Zugabe von Polymerisationsinitiatoren und gegebenenfalls Reglern eingeleitet wird, wobei während der Polymerisation eine weitere Menge M2 einer Mischung zudosiert wird, deren Zusammensetzung gleich oder verschieden von der ersten Mischung M1 sein kann und die mindestens eine Komponente ausgewählt aus olefinisch ungesättigten Monomeren B und Verbindungen A enthält, wobei in mindestens einer der Mengen M1 und M2 ein Oligomer oder Polymer C gelöst ist und wobei mindestens eine der Mischungen M1 und M2 eine Komponente B enthält.

2. Verfahren nach Anspruch 1. dadurch gekennzeichnet, daß eine oder mehrere Verbindungen A nacn Abschluß der Polymerisation zugesetzt werden.

3. Verfahren nach Anspruch 1 oder 2, dadurcn gekennzeichnet, daß während der Polymerisation weitere Mengen an Poiymerisationsinitiatoren zudosiert werden.

4. Verfahren nach Anspruch 1 oder 2, dadurch gekennzeichnet, daß in der Mischung M1 nur Verbindungen A enthalten sind.

5. Verfahren nach Anspruch 1 oder 2, dadurch gekennzeichnet, daß in der Mischung M1 nur Verbindungen A und C enthalten sind.

6. Verfahren nach Anspruch 1 oder 2, dadurch gekennzeichnet, daß die Polymeren oder Oligomeren C funktionelle Gruppen ausgewählt aus Hydroxyl-, Carboxyl- und Amino-Gruppen oder olefinische Doppelbindungen aufweisen.

7. Verfahren nach Anspruch 1 oder 2, dadurch gekennzeichnet, daß ein oder mehrere Lösungsmittel vor, während oder nach der Polymerisation zu der Reaktionsmischung zugefügt werden.

8. Verfahren nach Anspruch 1 oder 2, dadurch gekennzeichnet, daß die Mischungen der Monomeren B jeweils eine oder mehrere der Verbindungen
B1 α,β-olefinisch ungesättigte Carbonsäuren,
B2 Ester von aliphatischen Alkoholen und α,β-olefinisch ungesättigten Carbonsäuren,
B3 Ester von aliphatischen Diolen oder Polyolen und n Hydroxylgruppen pro Molekül und 1 bis n-1 mol/mol an α,β-olefinisch ungesättigten Carbonsäuren, wobei n mindestens 2 ist,
B4 Amide, N-substituierte Amide und Nitrile von α,β-olefinisch ungesättigten Carbonsäuren,
B5 Vinylverbindungen ausgewählt aus Vinylestern von aliphatischen Monocarbonsäuren mit 1 bis 20 Kohlenstoffatomen, Vinylketonen, Vinyläthern, Vinylhalogeniden, Vinylaromaten und Vinylidenhalogeniden,
enthalten, wobei jeweils mindestens eine Verbindung aus jeder der Gruppen B1 und B2 enthalten ist und Verbindungen aus den Gruppen B3, B4 und B5 optional enthalten sein können.

9. Verfahren nach Anspruch 1 oder 2, dadurch gekennzeichnet, daß die Komponente A eine oder mehrere Verbindungen enthält, die mit einer Verbindung gemäß B1 einen Ester oder ein Amid unter Addition oder Polyaddition bildet.

10. Verfahren nach Anspruch 1 oder 2, dadurch gekennzeichnet, daß die Komponente A eine oder mehrere Verbindungen enthält, die mit einer Verbindung gemäß B3 einen Ester unter Addition oder Polyaddition bildet.

11. Verfahren nach Anspruch 1 oder 2, dadurch gekennzeichnet, daß die Komponente A ausgewählt ist aus Epoxyverbindungen, Lactonen, Lactamen, cyclischen Carbonaten, Maleinaten, cyclischen Anhydriden, cyclischen Acetalen und Ketenen.

12. Verfahren nach Anspruch 1 oder 2, dadurch gekennzeichnet, daß die Komponente A ausgewählt ist aus Glycidylestern mit 7 bis 30 C-Atomen von aliphatischen gesättigten Monocarbonsäuren mit einem tertiären oder quaternären α-C-Atom.

13. Verfahren nach Anspruch 1 oder 2, dadurch gekennzeichnet, daß die Komponente C ein Oligomer oder Polymer ist mit im Mittel mindestens einer funktionellen Gruppe oder einer polymerisierbaren Doppelbindung pro Molekül, wobei die funktionelle Gruppe der Komponente C mit funktionellen Gruppen der eingesetzten Monomeren B unter Ausbildung einer chemischen Bindung reagieren kann.

14. Verfahren nach Anspruch 1 oder 2, dadurch gekennzeichnet, daß als Komponente C eine oder mehrere Verbindungen mit funktionellen Gruppen eingesetzt werden ausgewählt aus
C1 Polyestern aus aliphatischen Diolen und aliphatischen Dicarbonsäuren und/oder Lactonen, wobei bis zu 5 % der Carbonsäuren und/oder der Diole durch Polycarbonsäuren bzw. durch Polyole mit jeweils drei oder mehr funktionellen Gruppen ersetzt werden können, und bis zu 5 % der Carbonsäuren olefinisch ungesättigt sein können,
C2 Polyamiden aus aliphatischen Dicarbonsäuren, aliphatischen Diaminen und/oder Lactamen, wobei bis zu 5 % der Carbonsäuren und/oder der Diamine durch Polycarbonsäuren bzw. durch Polyamine mit jeweils drei oder mehr funktionellen Gruppen ersetzt werden können, und bis zu 5 % der Carbonsäuren olefinisch ungesättigt sein können,
C3 Polyäthern aus aliphatischen Diolen, die gegebenenfalls Aminoendgruppen tragen können, sowie Polyäthern, die aus Glycidyläthern von aromatischen oder aliphatischen Di- und/oder Polyhydroxyverbindungen gebildet werden können, wobei bis zu 5 % der Hydroxyverbindungen olefinisch ungesättigt sein können,
C4 Polymeren, die durch gemeinsame Polymerisation von Verbindungen mit einer olefinischen Doppelbindung und mindestens 2 %, bezogen auf die Masse der Monomeren, an Verbindungen mit mindestens zwei olefinischen Doppelbindungen erhältlich sind,
wobei die funktionellen Gruppen ausgewählt sind aus Hydroxyl-, Carboxyl- und Amino-Gruppen und olefinischen Doppelbindungen.

15. Verfahren nach Anspruch 1 oder 2, dadurch gekennzeichnet, daß
1,0 bis 35,0 % der Komponente A und
98,9 bis 40,0 % der Komponente B und
0,1 bis 25,0 % der Komponente C eingesetzt werden.

16. Copolymerisate, hergestellt nach einem der Verfahren gemäß den Ansprüchen 1 bis 15.

17. Copolymerisate nach Anspruch 16, dadurch gekennzeichnet, daß die Monomeren B zusammengesetzt sind aus
B1 1 bis 50 % von α,β-olefinisch ungesättigten Carbonsäuren,
B2 5 bis 99 % von Estern von aliphatischen Alkoholen mit 1 bis 30 Kohlenstoffatomen und α,β-olefinisch ungesättigten Carbonsäuren
B3 0 bis 45 % von Estern von aliphatischen Diolen oder Polyolen mit 2 bis 30 Kohlenstoffatomen und n Hydroxylgruppen pro Molekül und 1 bis n-1 mol/mol an α,β-olefinisch ungesättigten Carbonsäuren, wobei n mindestens 2 ist,
B4 0 bis 45 % von Amiden, N-substituierten Amiden und Nitrilen von α,β-olefinisch ungesättigten Carbonsäuren,
B5 0 bis 45 % von Vinylverbindungen ausgewählt aus Vinylestern von aliphatischen Monocarbonsäuren mit 1 bis 20 Kohlenstoffatomen, Vinylketonen, Vinyläthern, Vinylhalogeniden, Styrol, Vinyltoluol und Vinylidenhalogeniden.
wobei die Summe der Massenanteile sich stets auf 100 % ergänzt.

18. Copolymerisate gemäß Anspruch 16, dadurch gekennzeichnet, daß die Monomere B1 ausgewählt sind aus α,β-olefinisch ungesättigten Monocarbonsäuren mit 3 bis 22 Kohlenstoffatomen und Estern aus n-1 mol eines aliphatischen Alkohols mit 1 bis 10 Kohlenstoffatomen mit 1 mol einer α,β-olefinisch ungesättigten n-basigen Polycarbonsäure mit 4 bis 22 Kohlenstoffatomen, wobei n mindestens zwei ist.

19. Copolymerisate gemäß Anspruch 16, dadurch gekennzeichnet, daß die Monomere B2 ausgewählt sind aus Estern von aliphatischen Alkoholen mit 1 bis 30 Kohlenstoffatomen und α,β-olefinisch ungesättigten Carbonsäuren mit 3 bis 22 Kohlenstoffatomen.

20. Copolymerisate gemäß Anspruch 16, dadurch gekennzeichnet, daß die Monomere B3 ausgewählt sind aus Estern von aliphatischen Diolen oder Polyolen mit 2 bis 30 Kohlenstoffatomen und n Hydroxylgruppen pro Molekül und 1 bis n-1 mol/mol an α,β-olefinisch ungesättigten Carbonsäuren mit 3 bis 22 Kohlenstoffatomen, wobei n mindestens 2 ist.

21. Copolymerisate gemäß Anspruch 16, dadurch gekennzeichnet, daß die Monomere B4 ausgewählt sind aus Amiden, N-substituierte Amiden und Nitrilen von α,β-olefinisch ungesättigten Carbonsäuren mit 3 bis 22 Kohlenstoffatomen.

22. Copolymerisate gemäß Anspruch 16, dadurch gekennzeichnet, daß die Monomere B5 ausgewählt sind aus Vinylestern von aliphatischen Monocarbonsäuren mit 1 bis 20 Kohlenstoffatomen, Vinylketonen und Vinyläthern mit 4 bis 20 Kohlenstoffatomen, Vinylchlorid, Styrol, Vinyltoluol, Vinylnaphthalin und Vinylidenchlorid.

23. Copolymerisate gemäß Anspruch 16, dadurch gekennzeichnet, daß die Monomere B1 ausgewählt sind aus Acrylsäure, Methacrylsäure, Crotonsäure, Isocrotonsäure, Vinylessigsäure, sowie Maleinsäure und Fumarsäure und deren Halbester mit aliphatischen Alkoholen mit 1 bis 10 Kohlenstoffatomen.

24. Copolymerisate gemäß Anspruch 16, dadurch gekennzeichnet, daß die Monomere B2 ausgewählt sind aus Acrylsäure- und Methacrylsäureestern von aliphatischen Alkoholen mit 1 bis 10 Kohlenstoffatomen.

25. Copolymerisate gemäß Anspruch 16, dadurch gekennzeichnet, daß die Monomere B3 ausgewählt sind aus Hydroxyalkylacrylaten und -methacrylaten mit 2 bis 30 Kohlenstoffatomen im Alkylenrest.

26. Copolymerisate gemäß Anspruch 16, dadurch gekennzeichnet, daß die Monomere B4 ausgewählt sind aus Acrylamid, Methacrylamid, N-Alkyl- und N,N-Dialkyl-(meth)acrylamid mit 1 bis 6 Kohlenstoffatomen im Alkylrest sowie Methacrylnitril und Acrylnitril.

27. Copolymerisate gemäß Anspruch 16 mit einer OH-Zahl von 40 bis 250 mg KOH/g, einer Lösungsviskosität von 15 bis 2000 mPa·s (50 %ig, 23 °C), einer gewichtsmittleren Molmasse (M_{w}) von kleiner als 10 000 g/mol und einem Massenanteil an Methylmethacrylat von mehr als 15 %.

28. Verwendung von Copolymerisaten gemäß Anspruch 16 in Bindemitteln für Lacke.

29. Verwendung von Copolymerisaten gemäß Anspruch 16 in Bindemitteln für festkörperreiche Lacke.

30. Bindemittel für Lacke, enthaltend Copolymerisate gemäß Anspruch 16 und Vernetzungsmittel, ausgewählt aus Isocyanaten, Melaminharzen und Epoxyverbindungen.

## Claims

1. A process for the preparation of functional polymers of low molecular weight, which comprises initially charging, prior to polymerization, a first quantity M1 of a mixture comprising at least one component selected from olefinically unsaturated monomers B and compounds A which are not themselves copolymerizable but which are able to react with at least one of the monomers B and so form a copolymerizable addition compound, then initiating the polymerization by adding polymerization initiators and, if desired, regulators, and metering in during the polymerization a further quantity M2 of a mixture whose composition can be identical to or different from that of the first mixture M1 and which comprises at least one component selected from olefinically unsaturated monomers B and compounds A, where an oligomer or polymer C is dissolved in at least one of the quantities M1 and M2 and where at least one of the mixtures M1 and M2 comprises a component B.

2. The process as claimed in claim 1, wherein one or more compounds A are added after the end of polymerization.

3. The process as claimed in claim 1 or 2, wherein further quantities of polymerization initiators are metered in during the polymerization.

4. The process as claimed in claim 1 or 2, wherein only compounds A are present in the mixture M1.

5. The process as claimed in claim 1 or 2, wherein only compounds A and C are present in the mixture M1.

6. The process as claimed in claim 1 or 2, wherein the polymers or oligomers C contain functional groups selected from hydroxyl, carboxyl and amino groups or olefinic double bonds.

7. The process as claimed in claim 1 or 2, wherein one or more solvents are added to the reaction mixture before, during or after the polymerization.

8. The process as claimed in claim 1 or 2, wherein the mixtures of the monomers B comprise in each case one or more of the compounds
B1 α,β-olefinically unsaturated carboxylic acids,
B2 esters of aliphatic alcohols and α,β-olefinically unsaturated carboxylic acids,
B3 esters of aliphatic diols or polyols and n hydroxyl groups per molecule and from 1 to n-1 mol/mol of α,β-olefinically unsaturated carboxylic acids, n being at least 2,
B4 amides, N-substituted amides and nitriles of α,β-olefinically unsaturated carboxylic acids, and
B5 vinyl compounds selected from vinyl esters of aliphatic monocarboxylic acids having 1 to 20 carbon atoms, vinyl ketones, vinyl ethers, vinyl halides, vinylaromatic compounds and vinylidene halides,
in which in each case at least one compound from each of groups B1 and B2 is present and compounds from groups B3, B4 and B5 can optionally be present.

9. The process as claimed in claim 1 or 2, wherein component A comprises one or more compounds which undergo addition or polyaddition with a compound according to B1 to form an ester or an amide.

10. The process as claimed in claim 1 or 2, wherein component A comprises one or more compounds which undergo addition or polyaddition with a compound according to B3 to form an ester.

11. The process as claimed in claim 1 or 2, wherein component A is selected from epoxy compounds, lactones, lactams, cyclic carbonates, maleates, cyclic anhydrides, cyclic acetals and ketenes.

12. The process as claimed in claim 1 or 2, wherein component A is selected from glycidyl esters having 7 to 30 carbon atoms of aliphatic saturated monocarboxylic acids having a tertiary or quaternary α carbon atom.

13. The process as claimed in claim 1 or 2, wherein component C is an oligomer or polymer having on average at least one functional group or one polymerizable double bond per molecule, the functional group of component C being able to react with functional groups of the monomers B employed to form a chemical bond.

14. The process as claimed in claim 1 or 2, wherein component C comprises one or more compounds having functional groups, selected from
C1 polyesters of aliphatic diols and aliphatic dicarboxylic acids and/or lactones, in which case up to 5% of the carboxylic acids and/or of the diols can be replaced by polycarboxylic acids or, respectively, by polyols having in each case three or more functional groups, and up to 5% of the carboxylic acids can be olefinically unsaturated,
C2 polyamides of aliphatic dicarboxylic acids, aliphatic diamines and/or lactams, in which case up to 5% of the carboxylic acids and/or of the diamines can be replaced by polycarboxylic acids or, respectively, by polyamines having in each case three or more functional groups, and up to 5% of the carboxylic acids can be olefinically unsaturated,
C3 polyethers of aliphatic diols which may if desired carry amino end groups, and polyethers which can be formed from glydicyl ethers of aromatic or aliphatic di- and/or polyhydroxy compounds, in which case up to 5% of the hydroxy compounds can be olefinically unsaturated, and
C4 polymers which are obtainable by copolymerization of compounds having one olefinic double bond and at least 2%, based on the mass of the monomers, of compounds having at least two olefinic double bonds,
the functional groups being selected from hydroxyl, carboxyl and amino groups and olefinic double bonds.

15. The process as claimed in claim 1 or 2, wherein
from 1.0 to 35.0% of component A and
from 98.9 to 40.0% of component B and
from 0.1 to 25.0% of component C are employed.

16. A copolymer prepared by a process as claimed in any of claims 1 to 15.

17. A copolymer as claimed in claim 16, wherein the monomers B are composed of
B1 from 1 to 50% of α,β-olefinically unsaturated carboxylic acids,
B2 from 5 to 99% of esters of aliphatic alcohols having 1 to 30 carbon atoms and α,β-olefinically unsaturated carboxylic acids,
B3 from 0 to 45% of esters of aliphatic diols or polyols having 2 to 30 carbon atoms and n hydroxyl groups per molecule and from 1 to n-1 mol/mol of α,β-olefinically unsaturated carboxylic acids, n being at least 2,
B4 from 0 to 45% of amides, N-substituted amides and nitriles of α,β-olefinically unsaturated carboxylic acids, and
B5 from 0 to 45% of vinyl compounds selected from vinyl esters of aliphatic monocarboxylic acids having 1 to 20 carbon atoms, vinyl ketones, vinyl ethers, vinyl halides, styrene, vinyltoluene and vinylidene halides,
the sum of the mass fractions always adding to give 100%.

18. A copolymer as claimed in claim 16, wherein the monomers B1 are selected from α,β-olefinically unsaturated monocarboxylic acids having 3 to 22 carbon atoms and esters of n-1 mol of an aliphatic alcohol having 1 to 10 carbon atoms with 1 mol of an α,β-olefinically unsaturated n-basic polycarboxylic acid having 4 to 22 carbon atoms, n being at least two.

19. A copolymer as claimed in claim 16, wherein the monomers B2 are selected from esters of aliphatic alcohols having 1 to 30 carbon atoms and α,β-olefinically unsaturated carboxylic acids having 3 to 22 carbon atoms.

20. A copolymer as claimed in claim 16, wherein the monomers B3 are selected from esters of aliphatic diols or polyols having 2 to 30 carbon atoms and n hydroxyl groups per molecule and from 1 to n-1 mol/mol of *α,*β-olefinically unsaturated carboxylic acids having 3 to 22 carbon atoms, n being at least 2.

21. A copolymer as claimed in claim 16, wherein the monomers B4 are selected from amides, N-substituted amides and nitriles of α,β-olefinically unsaturated carboxylic acids having 3 to 22 carbon atoms.

22. A copolymer as claimed in claim 16, wherein the monomers B5 are selected from vinyl esters of aliphatic monocarboxylic acids having 1 to 20 carbon atoms, vinyl ketones and vinyl ethers having 4 to 20 carbon atoms, vinyl chloride, styrene, vinyltoluene, vinylnaphthalene and vinylidene chloride.

23. A copolymer as claimed in claim 16, wherein the monomers B1 are selected from acrylic acid, methacrylic acid, crotonic acid, isocrotonic acid, vinylacetic acid, and maleic acid and fumaric acid and the monoesters thereof with aliphatic alcohols having 1 to 10 carbon atoms.

24. A copolymer as claimed in claim 16, wherein the monomers B2 are selected from acrylic and methacrylic esters of aliphatic alcohols having 1 to 10 carbon atoms.

25. A copolymer as claimed in claim 16, wherein the monomers B3 are selected from hydroxyalkyl acrylates and hydroxyalkyl methacrylates having 2 to 30 carbon atoms in the alkylene radical.

26. A copolymer as claimed in claim 16, wherein the monomers B4 are selected from acrylamide, methacrylamide, N-alkyl- and N,N-dialkyl(meth)acrylamide having 1 to 6 carbon atoms in the alkyl radical, and methacrylonitrile and acrylonitrile.

27. A copolymer as claimed in claim 16, having an OH number of from 40 to 250 mg of KOH/g, a solution viscosity of from 15 to 2000 mPa·s (50% strength, 23°C), a weight-average molecular mass (M_{w}) of less than 10,000 g/mol and a methyl methacrylate mass fraction of more than 15%.

28. The use of a copolymer as claimed in claim 16 in binders for coating materials.

29. The use of a copolymer as claimed in claim 16 in binders for high-solids coating materials.

30. A binder for a coating material, comprising one or more copolymers as claimed in claim 16 and crosslinking agents selected from isocyanates, melamine resins and epoxy compounds.

## Revendications

1. Procédé pour la préparation de polymères fonctionnels de bas poids moléculaire, caractérisé en ce que l'on place avant le début de la polymérisation une première quantité M1 d'un mélange, lequel contient au moins un composant pris parmi les monomères à insaturation éthylénique B et les composés A, lesquels ne sont pas polymérisables eux-mêmes, mais qui peuvent réagir avec au moins un des monomères B en formant un composé d'addition copolymérisable, ensuite on déclenche la polymérisation par ajout d'amorceurs de polymérisation et éventuellement de régulateurs, en ajoutant progressivement au cours de la polymérisation une autre quantité M2 d'un mélange dont la composition peut être identique ou différente du premier mélanger M1 et lequel contient au moins un composant pris parmi les monomères à insaturation oléfinique B et les composés A, dans au moins une des quantités M1 et M2 un oligomère ou polymère C étant dissous et au moins un des mélanges M1 et M2 contient un composant B.

2. Procédé selon la revendication 1, caractérisé en ce que l'on ajoute un ou plusieurs composés A après la fin de la polymérisation.

3. Procédé selon la revendication 1 ou 2, caractérisé en ce que l'on ajoute progressivement au cours de la polymérisation d'autres quantités d'amorceurs de polymérisation.

4. Procédé selon la revendication 1 ou 2, caractérisé en ce que le mélange M1 contient uniquement des composés A.

5. Procédé selon la revendication 1 ou 2, caractérisé en ce que le mélange M1 contient uniquement des composés A et C.

6. Procédé selon la revendication 1 ou 2, caractérisé en ce que les polymères ou oligomères C présentent des groupes fonctionnels pris parmi les groupes hydroxyle, carboxyle et amino ou les doubles liaisons oléfiniques.

7. Procédé selon la revendication 1 ou 2, caractérisé en ce que l'on ajoute au mélange réactionnel un ou plusieurs solvants avant, au cours ou après la polymérisation.

8. Procédé selon la revendication 1 ou 2, caractérisé en ce que les mélanges des monomères B contiennent chacun un ou plusieurs des composés
B1 des acides carboxyliques à insaturation oléfinique en α,β,
B2 des esters d'alcools aliphatiques et d'acides carboxyliques à insaturation oléfinique en α,β,
B3 des esters de diols ou de polyols aliphatiques avec n groupes hydroxyle par molécule et de 1 à n-1 mole/mole d'acides carboxyliques à insaturation oléfinique en α,β, n valant d'au moins 2,
B4 des amides, des amides substitués sur N et des nitriles d'acides carboxyliques à insaturation oléfinique en α,β,
B5 des composés vinyliques pris parmi les esters vinyliques d'acides monocarboxyliques aliphatiques avec 1 à 20 atomes de carbone, les vinylcétones, les éthers vinyliques, les halogénures vinyliques, les composés vinylaromatiques et les halogénures de vinylidène,
chaque fois, au moins un composé pris dans chacun des groupes B1 et B2 et des composés des groupes B3, B4 et B5 pouvant être contenus de façon arbitraire.

9. Procédé selon la revendication 1 ou 2, caractérisé en ce que le composant A contient un ou plusieurs composés, lesquels forment un ester ou un amide avec un composé selon B1 par addition ou polyaddition.

10. Procédé selon la revendication 1 ou 2, caractérisé en ce que le composant A contient un ou plusieurs composés, lesquels forment un ester ou un amide avec un composé selon B3 par addition ou polyaddition.

11. Procédé selon la revendication 1 ou 2, caractérisé en ce que le composant A est pris parmi les composés époxy, les lactones, les lactames, les carbonates cycliques, les maléates, les anhydrides cycliques, les acétals cycliques et les céténes.

12. Procédé selon la revendication 1 ou 2, caractérisé en ce que le composant A est pris parmi les esters glycidyliques avec 7 à 30 atomes de carbone d'acides monocarboxyliques aliphatiques saturés contenant un atome de carbone α tertiaire ou quaternaire.

13. Procédé selon la revendication 1 ou 2, caractérisé en ce que le composant C est un oligomère ou polymère présentant en moyenne au moins un groupe fonctionnel ou une double liaison polymérisable par molécule, le groupe fonctionnel du composant C pouvant réagir avec des groupes fonctionnels du monomère B utilisé en formant une liaison chimique.

14. Procédé selon la revendication 1 ou 2, caractérisé en ce que l'on emploie en tant que composant C un ou plusieurs composés avec des groupes fonctionnels pris parmi
C1 les polyesters de diols aliphatiques et d'acides dicarboxyliques aliphatiques et/ou de lactones, jusqu'à 5 % des acides carboxyliques et/ou des diols pouvant être remplacés par des acides polycarboxyliques respectivement par des polyols chacun comportant 3 ou plus groupes fonctionnels, et jusqu'à 5 % des acides carboxyliques pouvant présenter une insaturation oléfinique,
C2 les polyamides d'acides dicarboxyliques, de diamines aliphatiques et/ou de lactames, jusqu'à 5 % des acides carboxyliques et/ou des diamines pouvant être remplacés par des acides polycarboxyliques respectivement par des polyamines chacun comportant 3 ou plus groupes fonctionnels, et jusqu'à 5 % des acides carboxyliques pouvant présenter une insaturation oléfinique,
C3 les polyéthers de diols aliphatiques, lesquels peuvent éventuellement porter des groupes terminaux amino, ainsi que des polyéthers, lesquels peuvent être formés à partir des éthers glycidyliques de composés di- et/ou polyhydroxyliques aromatiques ou aliphatiques, jusqu'à 5 % des composés hydroxyliques pouvant présenter une insaturation oléfinique,
C4 les polymères, que l'on peut obtenir par polymérisation commune de composés avec une double liaison oléfinique et d'au moins 2 %, par rapport à la masse des monomères, de composés avec au moins deux doubles liaisons oléfiniques,
les groupes fonctionnels étant pris parmi les groupes hydroxyle, carboxyle et amino et les doubles liaisons oléfiniques.

15. Procédé selon la revendication 1 ou 2, caractérisé en ce que l'on emploie
de 1,0 à 35,0 % du composant A et
de 98,9 à 40,0 % du composant B et
de 0,1 à 25,0 % du composant C.

16. Copolymères préparés selon l'un des procédés selon les revendications 1 à 15.

17. Copolymères selon la revendication 16, caractérisés en ce que les monomères B sont composés
B1 de 1 à 50 % d'acides carboxyliques à insaturation oléfinique en α,β,
B2 de 5 à 99 % d'esters d'alcools aliphatiques comportant de 1 à 30 atomes de carbones et d'acides carboxyliques à insaturation oléfinique en α,β,
B3 de 0 à 45 % d'esters de diols ou de polyols aliphatiques avec 2 à 30 atomes de carbone et n groupes hydroxyle par molécule et de 1 à n-1 mole/mole d'acides carboxyliques à insaturation oléfinique en α,β, n valant au moins 2,
B4 de 0 à 45 % d'amides, d'amides substitués sur N et de nitriles d'acides carboxyliques à insaturation oléfinique en α,β,
B5 de 0 à 45 % de composés vinyliques pris parmi les esters vinyliques d'acides monocarboxyliques aliphatiques avec 1 à 20 atomes de carbone, les vinylcétones, les éthers vinyliques, les halogénures vinyliques, le styrène, le vinyl-toluène et les halogénures de vinylidène,
la somme des proportions en masse étant toujours complétée à 100 %.

18. Copolymères selon la revendication 16, caractérisés en ce que les monomères B1 sont pris parmi les acides monocarboxyliques à insaturation oléfinique en *α,β* comportant 3 à 22 atomes de carbone et les esters à partir de n-1 mole d'un alcool aliphatique comportant de 1 à 10 atomes de carbone avec 1 mole d'un acide polycarboxylique à fonctionnalité n à insaturation oléfinique en *α,β* comportant de 4 à 22 atomes de carbone, n valant au moins 2.

19. Copolymères selon la revendication 16, caractérisés en ce que les monomères B2 sont pris parmi les esters d'alcools aliphatiques avec 1 à 30 atomes de carbone et d'acides carboxyliques à insaturation oléfinique en α,β avec 3 à 22 atomes de carbone.

20. Copolymères selon la revendication 16, caractérisés en ce que les monomères B3 sont pris parmi les esters de diols ou de polyols aliphatiques avec 2 à 30 atomes de carbone et n groupes hydroxyle par molécule et de 1 à n-1 mole/mole d'acides carboxyliques à insaturation oléfinique en α, β avec 3 à 22 atomes de carbone, n valant au moins 2.

21. Copolymères selon la revendication 16, caractérisés en ce que les monomères B4 sont pris parmi les amides, les amides substitués sur N et les nitriles d'acides carboxyliques à insaturation oléfinique en α, β avec 3 à 22 atomes de carbone.

22. Copolymères selon la revendication 16, caractérisés en ce que les monomères B5 sont pris parmi les esters vinyliques d'acides aliphatiques monocarboxyliques avec 1 à 20 atomes de carbone, les vinylcétones et les éthers vinyliques avec 4 à 20 atomes de carbone, le chlorure de vinyle, le styrène, le vinyltoluène, le vinylnaphtalène et le chlorure de vinylidène.

23. Copolymères selon la revendication 16, caractérisés en ce que les monomères B1 sont pris parmi l'acide acrylique, l'acide méthacrylique, l'acide crotonique, l'acide iso-crotonique, l'acide vinyl-acétique, ainsi que l'acide maléique et l'acide fumarique et leurs hémi-esters avec des alcools aliphatiques comportant de 1 à 10 atomes de carbone.

24. Copolymères selon la revendication 16, caractérisés en ce que les monomères B2 sont pris parmi les esters de l'acide acrylique et de l'acide méthacrylique avec des alcools aliphatiques comportant de 1 à 10 atomes de carbone.

25. Copolymères selon la revendication 16, caractérisés en ce que les monomères B3 sont pris parmi les acrylates et les méthacrylates d'hydroxyalkyles comportant de 2 à 30 atomes de carbone dans le reste alkyle.

26. Copolymères selon la revendication 16, caractérisés en ce que les monomères B4 sont pris parmi l'acrylamide, le méthacrylamide, le N-alkyl- et le N,N-dialkyl-(méth)acrylamide comportant de 1 à 6 atomes de carbone dans le reste alkyle, ainsi que le méthacrylonitrile et l'acrylonitrile.

27. Copolymères selon la revendication 16, caractérisés en ce qu'ils présentent un indice OH de 40 à 250 mg KOH/g, une viscosité en solution de 15 à 2 000 mPa.s (à 50 %, 23°C), une masse molaire moyenne en poids (M_{w}) inférieure à 10 000 g/mole et un taux massique en méthacrylate de méthyle supérieur à 15 %.

28. Utilisation des copolymères selon la revendication 16 dans des liants pour vernis.

29. Utilisation de copolymères selon la revendication 16 dans des liants pour vernis ayant une teneur élevée en extrait sec.

30. Liants pour vernis contenant des copolymères selon la revendication 16 et des agents réticulants pris parmi les isocyanates, les résines de mélamine et les composés époxy.
